# EUROPEAN PATENT APPLICATION

(11) **EP 0 827 990 A2**
(43) Date of publication of application: **11.03.1998**
(21) Application number: 97306968.5
(22) Date of filing: 08.09.1997
(51) Int. Cl.: C09D 11/00, B01F 17/12, B01F 17/14

(54) **Ink and process for producing the same**

(30) Priority: 10.09.1996 JP 239579/96
(71) Applicant: MITA INDUSTRIAL CO. LTD., Osaka 540 (JP)
(72) Inventor: Kado, Seiji, Tamatsukuri 1-chome, Chuo-ku, Osaka 540 (JP); Nakatsu, Hiromi, Tamatsukuri 1-chome Chuo-ku, Osaka 540 (JP); Hiroshima, Susumu, Tamatsukuri 1-chome, Chuo-ku, Osaka 540 (JP); Miyaji, Shinki, Tamatsukuri 1-chome, Chuo-ku, Osaka 540 (JP); Ishii, Masayuki, Tamatsukuri 1-chome, Chuo-ku, Osaka 540 (JP)
(74) Representative: W.P. THOMPSON & CO.

(57) **Abstract**

According to the present invention, the storage stability and pigment dispersibility of pigment ink, for ink-jet printing, which is also superior in water resistance, light resistance and the like when printed, can be improved by the presence, as a dispersant, compounds represented by the following general formulas (1) and/or (2). 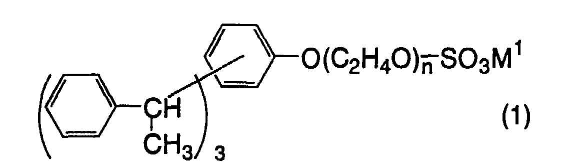 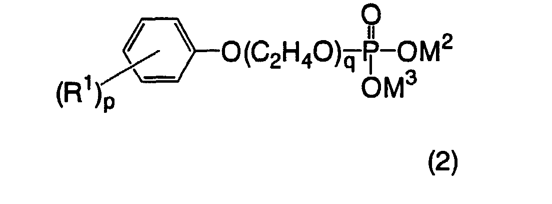 In the formula (1), M¹ is an alkaline metal or an ammonium group; and n is an integer of 2 to 20. In the formula (2), R¹ is an alkyl group or an aralkyl group; M² and M³ are each a hydrogen atom, an alkaline metal or an ammonium group; p is an integer from 1 to 3; and q is an integer from 2 to 20.

## Description

### BACKGROUND OF THE INVENTION

The present invention relates to ink which is particularly used in an ink-jet printer, and an efficient process for producing the same.

With the popularization of the personal computer, various types of printers such as laser printers, ink-jet printers, thermal transfer printers and the like have recently been popularized.

Among these, the demand for the ink-jet printer has rapidly increased because of its low printing noise, easy full-color printing and low running cost for printing in comparison with the other type of printers.

In the ink-jet printer, the printing is conducted by discharging fine particles of ink through an orifice (nozzle) of a recording head.

The following characteristics are required in ink used in an ink-jet printer:
(i) Good storage stability, that is, the characteristics of the ink does not vary even if the ink is stored for a long period of time;
(ii) Good frequency response characteristic of the ink corresponding to the printing rate of the printer, that is, stable charge and discharge of ink is always achieved in driving of the recording head within the range from low frequency to high frequency;
(iii) No clogging of the orifice of the recording head arises during printing or on restarting after the stoppage of printing;
(iv) Ink dries quickly on the surface of a recording paper, and the like;
(v) High image quality of the print; and
(vi) Excellent water resistance, light resistance and the like of the print.

As ink for ink-jet printers, those prepared by dissolving a dye in water or a mixed solution of water and a water-soluble organic solvent (referred generally to as an "aqueous medium") have hitherto been used.

However, such a dye ink is particularly insufficient in the above characteristic (vi), i.e., water resistance, light resistance and the like, in comparison with the other types of printers. This is one of points to be improved in the ink-jet printer.

Therefore, it has been considered to use, as a colorant of the ink, a pigment which is superior in water resistance, light resistance and the like to the dye. However, since the pigment is insoluble in the aqueous medium, unlike the dye, it is important to uniformly disperse the pigment in the aqueous medium. Therefore, it has been suggested to use various dispersants.

For example, Japanese Laid-open Patent Publication No. 3-97770 discloses ink using polyoxyethylene styrylphenyl ether as the dispersant.

Furthermore, Japanese Laid-open Patent Publication No. 4-18469 discloses ink using a compound represented by the general formula (3): 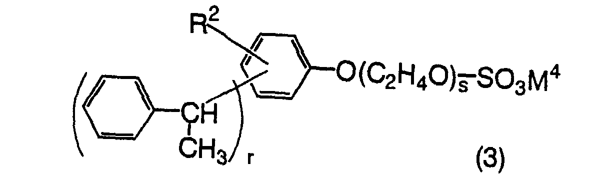 wherein R² is a hydrogen atom or a methyl group; M⁴ is a sodium or an ammonium group; r is an integer of 1 to 2; and s is an integer of 1 to 8 as the dispersant.

Furthermore, Japanese Laid-open Patent Publication No. 8-20739 discloses ink using a polyoxyethylene nonionic surfactant such as polyoxyethylene alkyl ethers, polyoxyethylene alkylaryl ethers, polyoxyethylene polyoxypropylene alkyl ethers, polyoxyethylenealkylamines, polyoxyethylene fatty acid alkanolamides, polyoxyethylene sorbitan fatty acid esters, polyoxyethylene sorbitol fatty acid esters and the like or a polyoxyethylene anionic surfactant such as polyoxyethylene alkyl ether sulfonates, polyoxyethylene alkylaryl ether sulfonates and the like as the dispersant.

However, as is apparent from the study of the present inventors, a sufficient effect has still to be obtained in all inks using the above conventional dispersant and there is much room for improvement.

### SUMMARY OF THE INVENTION

It is an object of the present invention to improve the storage stability of pigment ink and provide an ink which is particularly superior in water resistance, light resistance and similar properties when printed.

In order to solve the above problems, the present inventors have studied about the molecular structure of the dispersant. As a result, it has been found that, when using at least one of a compound represented by the general formula (1): 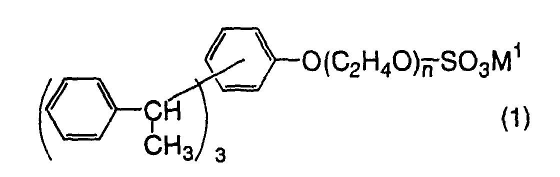 wherein M¹ is an alkaline metal or an ammonium group; and n is an integer from 2 to 20
and a compound represented by the general formula (2): 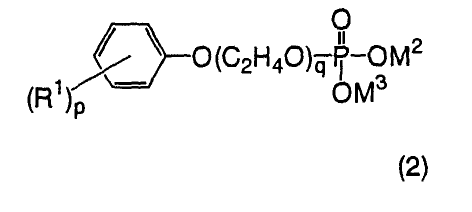 wherein R¹ is an alkyl group or an aralkyl group; M² and M³ are the same or different and indicate a hydrogen atom, an alkaline metal or an ammonium group provided that M² and M³ are not hydrogen atoms at the same time; p is an integer from 1 to 3; and q is an integer from 2 to 20,
which are similar to the compounds of the above previous applications but are not specifically disclosed therein, as the dispersant, the storage stability of pigment ink is improved more drastically than usual and the dispersibility of the pigment is also improved. Thus, the present invention has been accomplished.

That is, ink of the present invention comprises an aqueous medium and a pigment dispersed in the aqueous medium, said ink containing at least one of the above compound (1) and compound (2) as a dispersant.

Furthermore, a process of the present invention, which can be used for producing such ink, comprises blending at least one of the compounds (1) and (2) with a pigment and part of the water required to produce the ink, thereby to disperse the pigment in water, and adding the remaining water or the remaining water and a water-soluble organic solvent to dilute the dispersion.

According to the production process, the dispersant may be efficiently dispersed by using water in a minimum amount required to disperse the dispersant and at least one of the compounds (1) and (2), and the resulting ink is diluted to a predetermined concentration by adding the residual water and, optionally, a water-soluble organic solvent. Therefore, the production efficiency of ink can be improved in comparison with the case where the pigment is dispersed by adding the total amount of the total components constituting ink in one operation.

### DETAILED DESCRIPTION OF THE INVENTION

Ink of the present invention comprises an aqueous medium and a pigment dispersed in the aqueous medium, similar to conventional pigment inks, and further comprises at least one of the above compound (1) and compound (2) as a dispersant of the above pigment.

Examples of the alkaline metal for the groups M¹, M² and M³ in the compounds (1) and (2) include sodium, potassium and the like.

As the alkyl group for the group R¹ in the compound (2), a straight-chain alkyl group having about 5 to 15 carbon atoms is preferred considering the performance of the compound as the dispersant.

As the aralkyl group for the group R¹ in the compound (2), α-methylbenzyl represented by the formula (a): 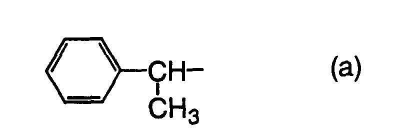 which is also used in the compound (1), is preferred. It may also be other aralkyl groups such as benzyl, benzhydryl, trityl, phenethyl and the like.

Specific examples of the compound (1) include a compound represented by the following formula (11), but are not limited thereto.

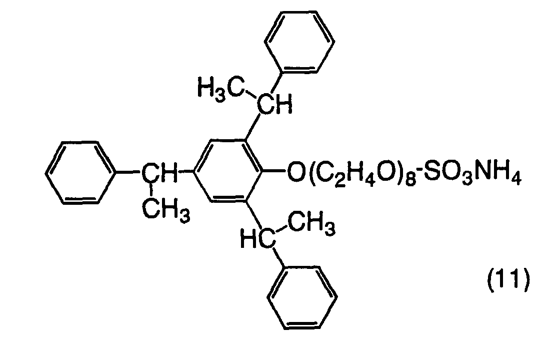

Specific examples of the compound (2) include compounds represented by the following formulas (21) to (25), but are not limited thereto.

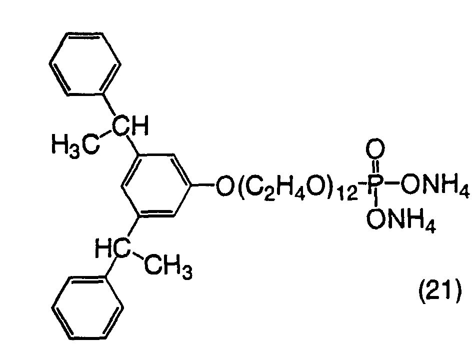

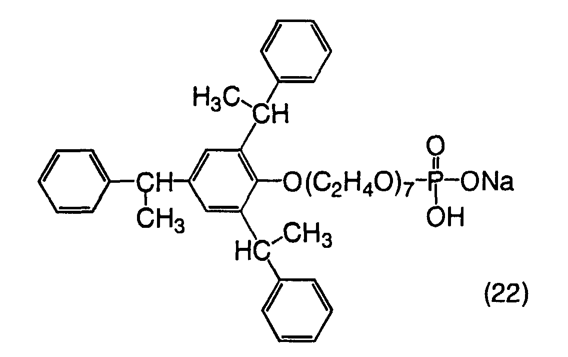

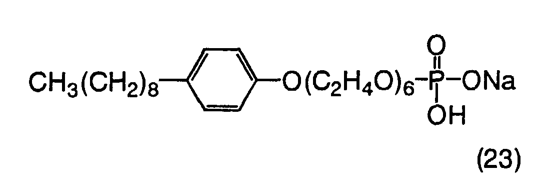

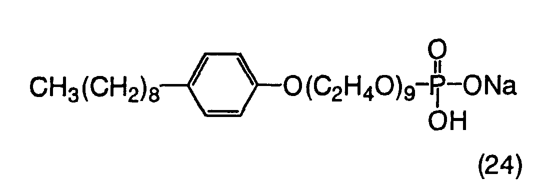

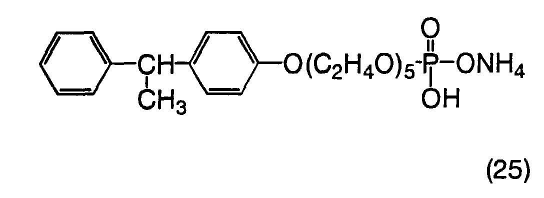

The content of the compounds (1) and (2) is not specifically limited in the present invention, but is preferably from 20 to 60 parts by weight based on 100 parts by weight of the pigment.

When the content is less than this range, the effect obtained by containing the compounds (1) and (2) as the dispersant becomes insufficient and the dispersibility of the above-described pigment and storage stability of ink are likely to deteriorate. On the contrary, even when the content exceeds the range, not only does the further addition tend not to have any effect but also the excess dispersant is likely to inhibit the above-described other characteristics of the ink.

When using any one of the compounds (1) and (2) alone, the stated content is the content of the compound alone. When using two or more compounds (1) and (2) in combination, the stated content is the content of the total of the respective compounds.

Examples of the water-soluble organic ink together with the above compounds (1) and (2), include water or a mixed solution of water and water-soluble organic solvent as described above.

Among them, examples of the water-soluble organic solvent include alcohols such as methanol, ethanol, n-propanol, isopropanol, sec-butanol and the like; amides such as dimethylformamide, dimethylacetamide and the like; ketones or ketone alcohols such as acetone, diacetone alcohol and the like; ethers such as tetrahydrofuran, dioxane and the like; polyhydric alcohols such as glycerine, ethylene glycol, diethylene glycol, triethylene glycol and the like; N-methyl-2-pyrrolidone, 1,3-dimethyl-2-imidazolidinone and the like.

Each of these organic solvents may act as any one of an evaporation adjustor which assists the evaporation of ink printed on the paper to adjust its evaporation rate, a viscosity adjustor for adjusting the viscosity of ink, and a surface tension adjustor for adjusting the surface tension of ink. Therefore, it is preferred to use two or more water-soluble organic solvents having their own excellent characteristics as described above in combination.

The amount of the water-soluble organic solvent is preferably not more than 30% by weight, more preferably from 5 to 20% by weight, based on the total amount of the aqueous medium in order to maintain characteristics as the aqueous medium. When using two or more water-soluble organic solvents, the stated amount is an amount of the total amount of them.

As the pigment, there can be used various inorganic or organic pigments. Among them, examples of the organic pigment include azo pigments, acridine pigments, phthalocyanine pigments, quinacridone pigments, anthraquinone pigments, indanthrene pigments, dioxazine pigments, indigo pigments, thioindigo pigments, perylene pigments, perinone pigments, isoindolenine pigments and the like.

When the full-color printing is conducted, there may be used inks of three colors such as cyan (C), magenta (M) and yellow (Y) or inks of four colors such as black (K) in addition to the above three colors of C, M and Y.

Examples of pigments as used in the respective colored inks as cyan, magenta and yellow are given below in Color Index Name.

As the pigment for cyan ink, Pigment Blue 2, Pigment Blue 15 [all sorts of 15:1 to 15:4] and the like are suitably used.

As the pigment for magenta ink, Pigment Red 5, Pigment Red 122 and the like are suitably used.

As the pigment for yellow ink, Pigment Yellow 17, Pigment Yellow 74 and the like are suitably used.

Examples of the pigment for black ink include Furnace Black, Lamp Black, Thermal Black, Acetylene Black, Channel Black, Roller Black, Disc Black and the like.

The amount of the pigment is not specifically limited, but is preferably from about 1 to 15 % by weight, more preferably about 3 to 12 % by weight, based on the total amount of ink.

In addition to the above respective components, various additives such as a defoaming agent, a pH adjustor and the like can be added to ink.

When producing ink of the present invention, first, one or more kinds of the above compounds (1) and (2), a pigment, water in the amount required to produce ink and, optionally, a defoaming agent may be blended in a predetermined proportion, and the blend may be subjected to a dispersion treatment using a ball mill and the like.

Then, the resulting dispersion is optionally subjected to a centrifugation treatment or a filtration treatment to remove coarse particles, optionally adding an additive such as a pH adjustor or the like and then adding the residual water or the residual water and a water-soluble organic solvent to dilute the dispersion to a predetermined concentration. Furthermore, coarse particles, agglomerates, impurities and the like may be removed by subjecting ink after production to a filtration treatment.

When a small amount of ink is produced, a predetermined amount of water, or water and a water-soluble organic solvent, and additives may be added without diluting or adding additive later, followed by a dispersion treatment.

As described above, according to the present invention, it becomes possible to improve the storage stability and pigment dispersibility of pigment ink which is particularly superior in water resistance, light resistance and the like of the print.

### EXAMPLES

### Example 1

Six parts by weight of a compound represented by the formula (11): 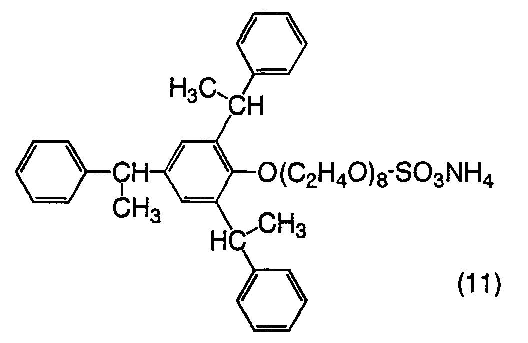 which is in accordance with formula (1) and the following respective components were subjected to a dispersion treatment using a ball mill for 24 hours, and then the resulting dispersion was subjected to a centrifugation treatment at 10,000 rpm for 20 minutes.

| (Component) | (Parts by weight) |
|---|---|
| Pigment Yellow 17 | 15 |
| Deionized water | 78 |
| Defoaming agent (*1) | 1 |

| | |
|---|---|
| (*1) "Antifoam" manufactured by Kao Corp. | |

Then, 30 parts by weight of the above dispersion and the following respective components were mixed with stirring and subjected to a filtration treatment using a filter of 2µm to produce yellow ink for an ink-jet printer.

| (Component) | (Parts by weight) |
|---|---|
| Glycerine | 10 |
| Ethanol | 3 |
| Diethylene glycol | 7 |
| Deionized water | 50 |

### Example 2

According to the same manner as in Example 1 except for using 4 parts by weight of the above compound (11), 3 parts by weight of a compound represented by the formula (25): 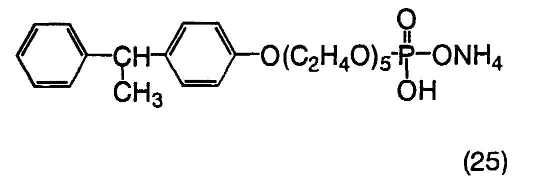 which is in accordance with formula (2) and the following respective components, a dispersion was prepared.

| (Component) | (Parts by weight) |
|---|---|
| Pigment Yellow 17 | 15 |
| Deionized water | 77 |
| Defoaming agent | 1 |

Then, according to the same manner as in Example 1 except for using 30 parts by weight of the above dispersion and the following respective components, yellow ink for an ink-jet printer was produced.

| (Component) | (Parts by weight) |
|---|---|
| Glycerine | 6 |
| Ethanol | 2 |
| Diethylene glycol | 10 |
| Deionized water | 52 |

### Comparative Example 1

According to the same manner as in Example 1 except for using 7 parts by weight of a compound (31) represented by the formula (31): 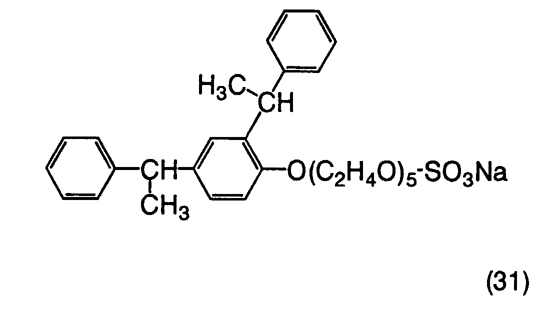 which is in accordance with formula (3) disclosed in the above previous application and the following respective components, a dispersion was prepared.

| (Component) | (Parts by weight) |
|---|---|
| Pigment Yellow 17 | 15 |
| Deionized water | 77 |
| Defoaming agent | 1 |

Then, according to the same manner as in Example 1 except for using 30 parts by weight of the above dispersion and the following respective components, yellow ink for an ink-jet printer was produced.

| (Component) | (Parts by weight) |
|---|---|
| Glycerine | 13 |
| Ethanol | 3 |
| Diethylene glycol | 7 |
| Deionized water | 47 |

Inks of the above respective Examples and Comparative Example were subjected to the following respective tests, and their characteristics were evaluated.

### Measurement of image density

Printing was carried out on the surface of a paper using inks of the respective Examples and Comparative Example for an ink-jet printer [MJ500C, manufactured by SEIKO EPSON CORP.], and then the density of the printed image was measured using a Macbeth densitometer [manufactured by Macbeth Co.].

### Evaluation of discharge characteristics

Using inks of the respective Examples and Comparative Example for the same ink-jet printer as that described above, the state of the printed dots when the printing was conducted with changing a printing interval of one dot was observed. Furthermore, the discharge characteristics of each ink were evaluated according to the following criteria.
G (good): No omission of dots is observed, good discharge characteristics
M (medium) : Omission of dots is present within the range of less 1% based on the total dots, slightly poor discharge characteristics
B (bad) : Omission of dots is present within the range of not less than 1% based on the total dots, poor discharge characteristics

### Evaluation of water resistance

Using inks of the respective Examples and Comparative Example for the same ink-jet printer as that described above, the printing was conducted on the surface of a paper. The paper immediately after printing was exposed to running water and the state of ink of the printed image was observed. Then, the water resistance of ink was evaluated according to the following criteria.
G (good): No flow and blot of ink are observed, good water resistance
M (medium) : No flow of ink is observed, but blot is observed, slightly poor water resistance
B (bad): Flow of ink is observed, poor water resistance

### Evaluation of storage stability I (change in viscosity)

Inks of the respective Examples and Comparative Example were stored in a sealed vessel under the temperature condition of 50°C for one month, and the viscosity [mPa · S] was measured. Then, by comparing with the viscosity immediately after production, the storage stability of ink was evaluated according to the following criteria.
G (good): No change in measured value of the viscosity is observed, good storage stability
M (medium): Change in measured value of the viscosity is less than 1 mPa · S, slightly poor storage stability
B (bad): Change in measured value of the viscosity is not less than 1 mPa · S, poor storage stability

### Evaluation of storage stability II (change in surface tension)

Inks of the respective Examples and Comparative Example were stored in a sealed vessel under the temperature condition of 50°C for one month, and the surface tension [mN/m] was measured. Then, by comparing with the surface tension immediately after production, the storage stability of ink was evaluated according to the following criteria.
G (good): No change in measured value of the surface tension is observed, good storage stability
M (medium): Change in measured value of the surface tension is less than 1 mN/m, slightly poor storage stability
B (bad): Change in measured value of the surface tension is not less than 1 mN/m, poor storage stability

### Evaluation of storage stability III (change in state of particles)

Inks of the respective Examples and Comparative Example were stored in a sealed vessel under the temperature condition of 50°C for one month, and the state of dispersed particles in ink was observed by using a microscope. Then, the storage stability of ink was evaluated according to the following criteria.
G (good) : No change in state of particles is observed in comparison with that immediately after production, good storage stability
B (bad) : Agglomeration of particles is observed, poor storage stability

The above results are shown in Table 1.

**Table 1**

| | Example 1 | Example 2 | Comparative Example 1 |
|---|---|---|---|
| Image density | 0.91 | 0.92 | 0.78 |
| Discharge characteristics | G | G | M |
| Water resistance | G | G | G |
| Storage stability I | G | G | G |
| Storage stability II | G | G | M |
| Storage stability III | G | G | B |

It was confirmed by Table 1 that inks of Examples 1 and 2 using the compounds which are in accordance with formulas (1) and (2) as the dispersant are superior in storage stability to ink of Comparative Example 1 using the compound which belongs to the conventional compound (3). It was confirmed that inks of the above Examples 1 and 2 are also superior in pigment dispersibility to ink of Comparative Example 1 because of its high image density and good discharge characteristics.

### Example 3

According to the same manner as in Example 1 except for using 5 parts by weight of a compound represented by the formula (22): 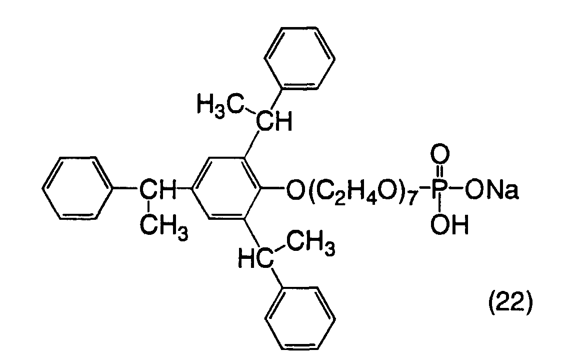 which is in accordance with formula (2) and the following respective components, a dispersion was prepared.

| (Component) | (Parts by weight) |
|---|---|
| Pigment Red 122 | 15 |
| Deionized water | 79 |
| Defoaming agent | 1 |

Then, according to the same manner as in Example 1 except for using 30 parts by weight of the above dispersion and the following respective components, magenta ink for an ink-jet printer was produced.

| (Component) | (Parts by weight) |
|---|---|
| Glycerine | 12 |
| Ethanol | 2 |
| Diethylene glycol | 6 |
| Deionized water | 50 |

### Example 4

According to the same manner as in Example 1 except for using 2 parts by weight of the above compound (11), 4 parts by weight of a compound represented by the formula (23): 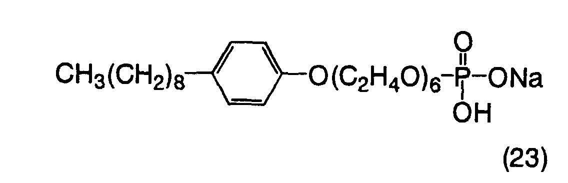 which is in accordance with formula (2) and the following respective components, a dispersion was prepared.

| (Component) | (Parts by weight) |
|---|---|
| Pigment Red 122 | 15 |
| Deionized water | 78 |
| Defoaming agent | 1 |

Then, according to the same manner as in Example 1 except for using 30 parts by weight of the above dispersion and the following respective components, magenta ink for an ink-jet printer was produced.

| (Component) | (Parts by weight) |
|---|---|
| Glycerine | 8 |
| Ethanol | 1 |
| Diethylene glycol | 9 |
| Deionized water | 52 |

### Comparative Example 2

According to the same manner as in Example 1 except for using 10 parts by weight of a compound represented by the formula (32): 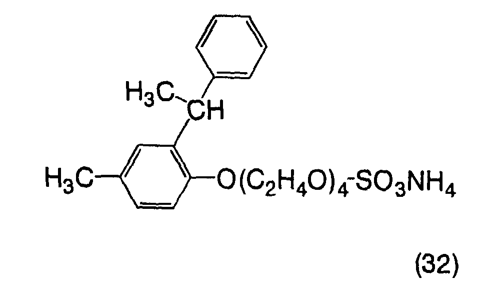 which is in accordance with formula (3) and the following respective components, a dispersion was prepared.

| (Component) | (Parts by weight) |
|---|---|
| Pigment Red 122 | 15 |
| Deionized water | 74 |
| Defoaming agent | 1 |

Then, according to the same manner as in Example 1 except for using 30 parts by weight of the above dispersion and the following respective components, magenta ink for an ink-jet printer was produced.

| (Component) | (Parts by weight) |
|---|---|
| Glycerine | 12 |
| Ethanol | 5 |
| Diethylene glycol | 8 |
| Deionized water | 45 |

Inks of the above respective Examples and Comparative Example were subjected to the above-described respective tests, and their characteristics were evaluated. The results are shown in Table 2.

**Table 2**

| | Example 3 | Example 4 | Comparative Example 2 |
|---|---|---|---|
| Image density | 0.83 | 0.80 | 0.73 |
| Discharge characteristics | G | G | G |
| Water resistance | G | G | M |
| Storage stability I | G | G | M |
| Storage stability II | G | G | G |
| Storage stability III | G | G | B |

It was confirmed by Table 2 that inks of Examples 3 and 4 using the compounds in accordance with the formulas (1) and (2) as the dispersant are superior in storage stability to ink of Comparative Example 2 using the compound which belongs to the conventional compound (3). It was confirmed that inks of the above Examples 3 and 4 are also superior in pigment dispersibility to ink of Comparative Example 2 because of its high image density. It was also confirmed that inks of the above Examples 3 and 4 are superior in water resistance to ink of Comparative Example 2.

### Example 5

According to the same manner as in Example 1 except for using 3 parts by weight of a compound represented by the formula (24): 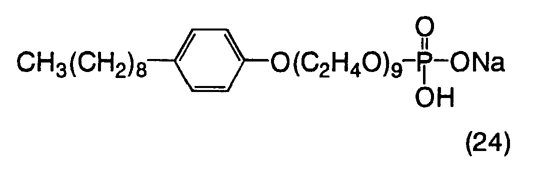 which is in accordance with formula (2) and the following respective components, a dispersion was prepared.

| (Component) | (Parts by weight) |
|---|---|
| Pigment Blue 15:3 | 15 |
| Deionized water | 81 |
| Defoaming agent | 1 |

Then, according to the same manner as in Example 1 except for using 30 parts by weight of the above dispersion and the following respective components, cyan ink for an ink-jet printer was produced.

| (Component) | (Parts by weight) |
|---|---|
| Glycerine | 10 |
| Ethanol | 5 |
| Diethylene glycol | 5 |
| Deionized water | 50 |

### Example 6

According to the same manner as in Example 1 except for using 1 part by weight of a compound represented by the formula (21): 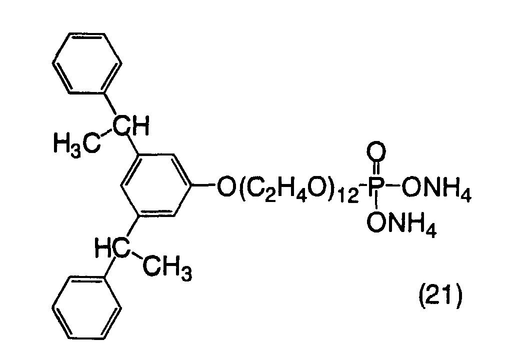 which is in accordance with formula (2), 3 parts by weight of the above compound (23) and the following respective components, a dispersion was prepared.

| (Component) | (Parts by weight) |
|---|---|
| Pigment Blue 15:3 | 15 |
| Deionized water | 80 |
| Defoaming agent | 1 |

Then, according to the same manner as in Example 1 except for using 30 parts by weight of the above dispersion and the following respective components, cyan ink for an ink-jet printer was produced.

| (Component) | (Parts by weight) |
|---|---|
| Glycerine | 6 |
| Ethanol | 5 |
| Diethylene glycol | 12 |
| Deionized water | 47 |

### Comparative Example 3

According to the same manner as in Example 1 except for using 4 parts by weight of the above compound (31), 4 parts by weight of the above compound (32) and the following respective components, a dispersion was prepared.

| (Component) | (Parts by weight) |
|---|---|
| Pigment Blue 15:3 | 15 |
| Deionized water | 76 |
| Defoaming agent | 1 |

Then, according to the same manner as in Example 1 except for using 30 parts by weight of the above dispersion and the following respective components, cyan ink for an ink-jet printer was produced.

| (Component) | (Parts by weight) |
|---|---|
| Glycerine | 15 |
| Ethanol | 3 |
| Diethylene glycol | 5 |
| Deionized water | 47 |

Inks of the above respective Examples and Comparative Example were subjected to the above-described respective tests, and their characteristics were evaluated. The results are shown in Table 3.

**Table 3**

| | Example 5 | Example 6 | Comparative Example 3 |
|---|---|---|---|
| Image density | 0.87 | 0.84 | 0.65 |
| Discharge characteristics | G | G | G |
| Water resistance | G | G | M |
| Storage stability I | G | G | M |
| Storage stability II | G | G | G |
| Storage stability III | G | G | B |

It was confirmed by Table 3 that inks of Examples 5 and 6 using the compounds which belong to the compounds (1) and (2) as the dispersant are superior in storage stability to ink of Comparative Example 3 using the compound which belongs to the conventional compound (3). It was confirmed that inks of the above Examples 5 and 6 are also superior in pigment dispersibility to ink of Comparative Example 3 because of its high image density. It was also confirmed that inks of the above Examples 5 and 6 are superior in water resistance to ink of Comparative Example 3.

### Example 7

According to the same manner as in Example 1 except for using 8 parts by weight of the above compound (11) and the following respective components, a dispersion was prepared.

| (Component) | (Parts by weight) |
|---|---|
| Carbon black | 15 |
| Deionized water | 76 |
| Defoaming agent | 1 |

Then, according to the same manner as in Example 1 except for using 30 parts by weight of the above dispersion and the following respective components, black ink for an ink-jet printer was produced.

| (Component) | (Parts by weight) |
|---|---|
| Glycerine | 13 |
| Ethanol | 2 |
| Diethylene glycol | 5 |
| Deionized water | 50 |

### Example 8

According to the same manner as in Example 1 except for using 4 parts by weight of the above compound (21), 5 parts by weight of the above compound (25) and the following respective components, a dispersion was prepared.

| (Component) | (Parts by weight) |
|---|---|
| Carbon black | 15 |
| Deionized water | 75 |
| Defoaming agent | 1 |

Then, according to the same manner as in Example 1 except for using 30 parts by weight of the above dispersion and the following respective components, black ink for an ink-jet printer was produced.

| (Component) | (Parts by weight) |
|---|---|
| Glycerine | 3 |
| Ethanol | 5 |
| Diethylene glycol | 15 |
| Deionized water | 47 |

### Comparative Example 4

According to the same manner as in Example 1 except for using 6 parts by weight of a compound represented by the formula (33): 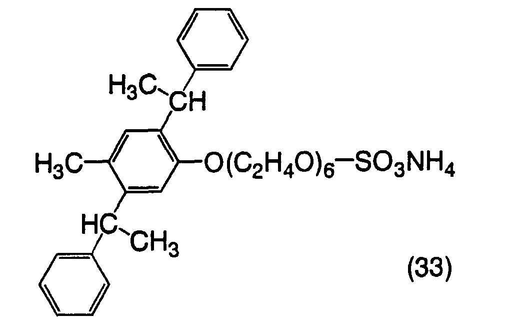 which is in accordance with compound (3) and the following respective components, a dispersion was prepared.

| (Component) | (Parts by weight) |
|---|---|
| Carbon black | 15 |
| Deionized water | 78 |
| Defoaming agent | 1 |

Then, according to the same manner as in Example 1 except for using 30 parts by weight of the above dispersion and the following respective components, black ink for an ink-jet printer was produced.

| (Component) | (Parts by weight) |
|---|---|
| Glycerine | 13 |
| Ethanol | 5 |
| Diethylene glycol | 10 |
| Deionized water | 42 |

Inks of the above respective Examples and Comparative Example were subjected to the above-described respective tests, and their characteristics were evaluated. The results are shown in Table 4.

**Table 4**

| | Example 7 | Example 8 | Comparative Example 4 |
|---|---|---|---|
| Image density | 1.34 | 1.32 | 1.20 |
| Discharge characteristics | G | G | M |
| Water resistance | G | G | G |
| Storage stability I | G | G | B |
| Storage stability II | G | G | G |
| Storage stability III | G | G | B |

It was confirmed by Table 4 that inks of Examples 7 and 8 using the compounds which are in accordance with formulas (1) and (2) as the dispersant are superior in storage stability to ink of Comparative Example 4 using the compound which is in accordance with the known formula (3). It was confirmed that inks of the above Examples 7 and 8 are also superior in pigment dispersibility to ink of Comparative Example 4 because of its high image density and good discharge characteristics.

## Claims

1. Ink comprising an aqueous medium and a pigment dispersed in the aqueous medium, said ink containing at least one of a compound represented by the general formula (1): 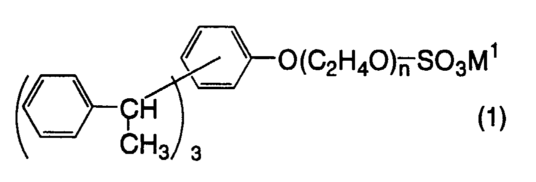 wherein M¹ is an alkaline metal or an ammonium group; and n is an integer from 2 to 20
and a compound represented by the general formula (2): 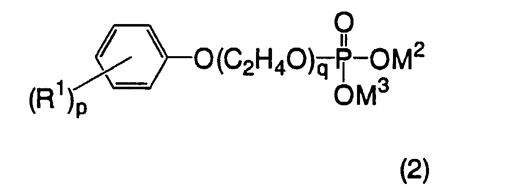 wherein R¹ is an alkyl group or an aralkyl group; M² and M³ are the same or different and indicate a hydrogen atom, an alkaline metal or an ammonium group provided that M² and M³ are not hydrogen atoms at the same time; p is an integer from 1 to 3; and q is an integer from 2 to 20, as a dispersant.

2. Ink according to claim 1, which contains at least one compound represented by the following formulas (11) and (21) to (25).

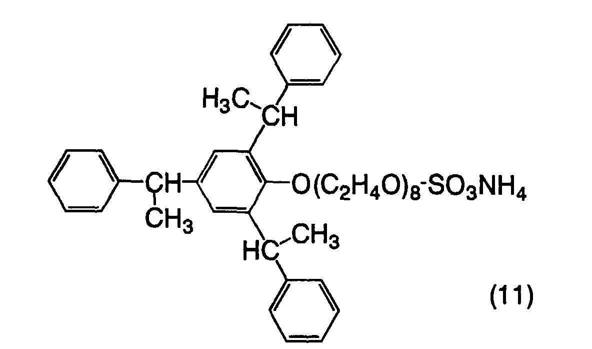

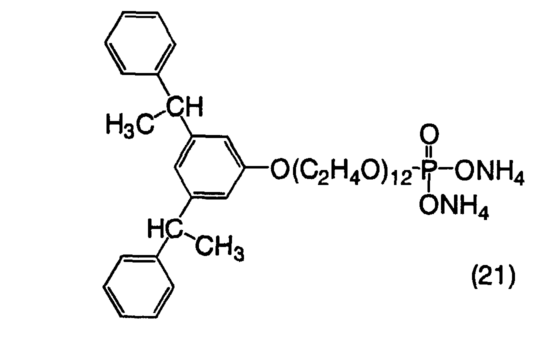

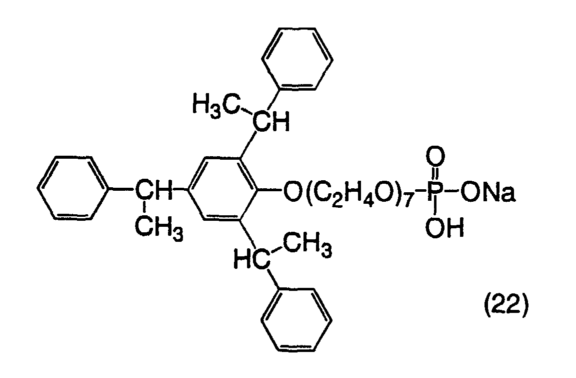

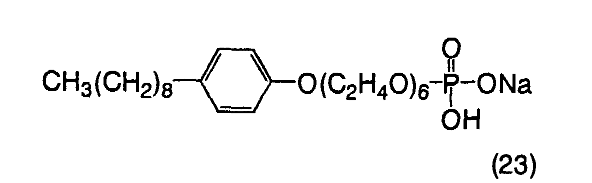

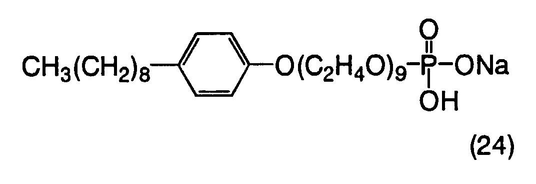

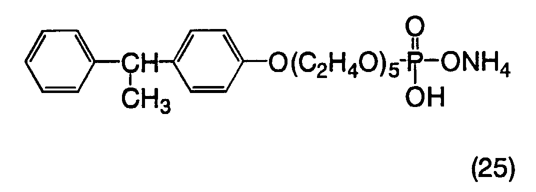

3. Ink according to claim 1 or 2, wherein the content of the compound(s) represented by the general formulas (1) and/or (2) is from 20 to 60 parts by weight based on 100 parts by weight of the pigment.

4. Ink according to any of claims 1 to 3, which is any one of cyan, magenta, yellow and black inks for full-color printing.

5. A process for producing ink according to claim 1, which comprises blending at least one of a compound represented by the general formula (1): 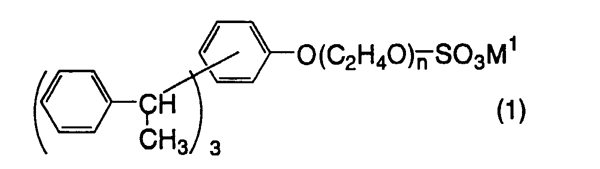 wherein M¹ is an alkaline metal or an ammonium group; and
n is an integer from 2 to 20 and a compound represented by the general formula (2): 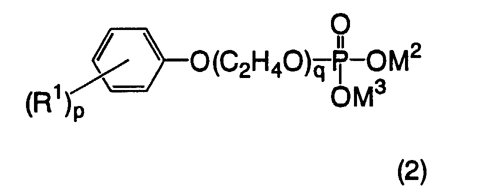 wherein R¹ is an alkyl group or an aralkyl group; M² and M³ are the same and different and indicate a hydrogen atom, an alkaline metal or an ammonium group provided that M² and M³ are not hydrogen atoms at the same time; p is an integer from 1 to 3; and q is an integer from 2 to 20 with a pigment and part of the water required to produce the ink, thereby to disperse the pigment in water, and adding the remaining water or the remaining water and a water-soluble organic solvent to dilute the dispersion.

6. Use of at least one of a compound represented by the general formula (1) and a compound represented by general formula (2), each as stated in claim 1, as a dispersant in an ink suitable for use in ink-jet printing.
